# EUROPEAN PATENT APPLICATION

(11) **EP 2 767 969 A1**
(43) Date of publication of application: **20.08.2014**
(21) Application number: 13188235.9
(22) Date of filing: 11.10.2013
(51) Int. Cl.: G09B 23/28

(54) **Dental mannequin simulation device and system**

(30) Priority: 11.10.2012 US 201261712677 P; 15.03.2013 US 201313832679
(71) Applicant: Dental Equipment LLC d/b/a Pelton & Crane Company, Charlotte, North Carolina NC 28273 (US)
(72) Inventor: Hemmer, Nathan, Newberg, OR Oregon 97132 (US)
(74) Representative: ABG Patentes, S.L.

(57) **Abstract**

In one embodiment, a dental mannequin simulation device and system for providing a simulated dental procedure is provided herein. The dental mannequin simulation device includes a dental mannequin head configured to simulate a head of a human or non-human animal, a sensor associated with the dental mannequin to sense a condition of the dental mannequin, and a signal output device to provide feedback to a user based in response to the condition, wherein the condition is motion, position, or orientation or frequency thereof, or physical contact with the mannequin.

## Description

### BACKGROUND

The intricacies of modem dental techniques make desirable for training and demonstration purposes the availability of life-like, accurate, dental models. Many dental procedures require a certain level of proficiency in order to achieve optimal results. These models may serve to enhance the education of those in the dental field by providing a geometrically accurate dental model for practice and training purposes. Dental training devices often fail to adequately provide feedback to a trainee before, during, or after a training session. Furthermore, effective and efficient training requires hands on use of a training device in addition to positive and negative feedback throughout the training process. Additionally, in the dental field, patient comfort and satisfaction are crucial. Therefore, feedback from the viewpoint of the patient is essential to a successful training experience in order to build well trained professionals who can maintain a successful practice, particularly in the dental profession.

Ergonomically dental work stations have remained substantially the same for many years. Manufacturers have improved the equipment and training institutions, and have taught students how this equipment can best be used. However, the principle ergonomic and dental operator performance requirements relating to oral care are in need of careful review.

### SUMMARY

The need for a system or device that allows dental professionals and dental students to perform trial dental procedures on model of a human or non-human oral cavity bearing a sufficient similarity to a human or non-human animal oral cavity has been realized herein. This system or device would enable a dental professional or dental student to optimize instrumentation and medical approaches for that particular procedure without putting a patient at risk. One aspect of the subject invention provides a mannequin of a human or non-human animal head and neck region including materials that closely mimic the physical properties of living tissues. The use of this mannequin would enable the dental professionals to perform a trial run procedure in an environment that closely resembles the patient's anatomy without any risk to the patient, or the dental student to learn how to perform a particular procedure before having to perform it on a patient. The present invention is designed to teach the skills a user will require in practice when dealing with a supine patient in the ergonomically preferred work zone in the midsagittal plane at heart level and in myocentric relationship.

In an embodiment, a dental mannequin simulation device for a dental training procedure is provided. The device includes a dental mannequin head configured to simulate a head of a human or non-human animal, a sensor associated with the dental mannequin to sense a condition of the dental mannequin, and a signal output device to provide feedback to a user based in response to the condition, wherein the condition is motion, position, or orientation or frequency thereof.

### BRIEF DESCRIPTION OF THE DRAWINGS

FIG. 1 provides a perspective view of an embodiment of the dental mannequin simulation device.
FIG. 2 provides a perspective view of another embodiment of the dental mannequin simulation device.
FIG. 3 provides a back side view of an embodiment of the dental mannequin simulation device.
FIG. 4 shows an example of the freedom of movement of an embodiment of a dental mannequin simulation device.

### DETAILED DESCRIPTION

For the purposes of promoting an understanding of the principles and operation of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to those skilled in the art to which the invention pertains. It is important to an understanding of the present invention to note that all technical and scientific terms used herein, unless defined herein, are intended to have the same meaning as commonly understood by one of ordinary skill in the art. The techniques employed herein are also those that are known to one of ordinary skill in the art, unless stated otherwise. For purposes of more clearly facilitating an understanding the invention as disclosed and claimed herein, the following definitions are provided.

A "predetermined value" as used herein, includes but is not limited to a value or range of values relating to an event involving use or operation, position or movement of the device. These may include, but are not limited to thresholds, ceilings, baselines or range values that are desired or undesired for a particular event. Examples of predetermined values include, but are not limited to, a predetermined orientation value, predetermined time value, or a predetermined contact value, in addition to other predetermined values described herein refers to a value that is used as a reference value in relation to a value, signal, or indication that is detected by, for example, a sensor of the device. Predetermined value may include an optimal value, or a sub-optimal value, or any value there between.

The term "condition" as used herein includes but is not limited to a user input, a status of the device, anything that is sensed by the device, correct or incorrect usage of the device, usage of the device over time, a motion, position, and/or orientation of the device or a frequency thereof, among other conditions. Condition may also refer to an error or a mistake in the use of the device whether the mistake is a correct or incorrect positioning, movement, or orientation of the device, incorrect or contact between the device and the user, or a value of the device that exceeds or fails to meet predetermined value, or a condition that fails to meet or exceeds a predetermined time value (such as placement of the device in a unfavorable position for an extended period of time, or excessive movement of the device within a short period of time). Conditions may also include errors of the device itself, including low or lack of power or failure to operate as intended.

"Motion" or "movement" relates to movement of the dental mannequin or a part thereof. The term "frequency" as used in relation to sensing a condition refers to sensing an amount of changes in a condition over a period of time. For example, with respect to orientation, a frequency would relate to a change in orientation over a period of time.

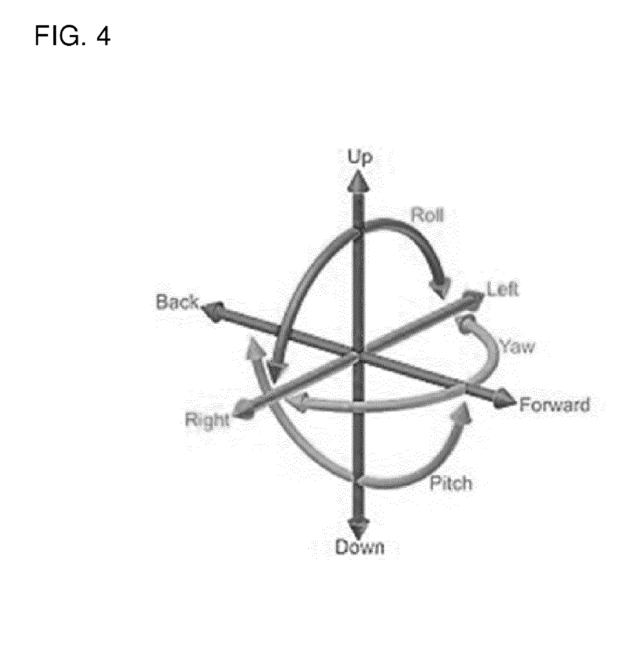

In a specific embodiment, the device is able to move with three or six degrees of freedom such as shown in FIG. 4.

As used herein, a change in position relates to forward or backward movement, upward or downward movement, or right or left movement of an object. Orientation relates to a change in pitch, roll or yaw of an object.

The terms "student" "user" and "trainee" can be used herein interchangeably to indicate a user of the device as described herein.

During the training of any medical professional, science, or pre-dental student, hands-on training is essential. It has been recognised for many years the necessity to teach a dental operator the skills he will subsequently use in practice, and it is preferable for the training to be undertaken reproducing, as closely as possible, the conditions which will be experienced in treating a patient, so that the learned skills will not need to be transferred to the applied.

Whole simulators are commonly used in dental training and these have ranged from simple training teeth and jaws to very complex and realistic models of the human dental mannequin. Technically these have ranged from partial to full task simulators but they have been directed to training for operators accustomed to the more traditional dental treatment stations, and fail to simulate the movements of a live patient, or provide teaching feedback to the user throughout the simulation for training purposes. Further, the mannequins by virtue of their presentation have not focused upon the natural skull movement about the occipito-atlantal joint, and therefore have not been realistic of the movements which will be experienced when treating a patient, particularly in a supine position.

The inventors have identified a device wherein a user or trainee can benefit and hone their training skills by receiving feedback from the viewpoint of a patient. A dental mannequin simulation device is provided herein to mimic the look and feel of a dental patient to accurately simulate a dental patient and increase the comfort, and efficiency of the user. The mannequin can exhibit many of the tactile sensations of a real human body to a student and may simulate some of the movement of a real human.

In one embodiment, a dental mannequin simulation device for a dental training procedure is provided. The dental mannequin simulation device includes a dental mannequin head configured to simulate a head of a human or non-human animal, a sensor associated with the dental mannequin to sense a condition of the dental mannequin, and a signal output device to provide feedback to a user based in response to the condition, wherein the condition is motion, position, or orientation, or frequency thereof. There may be one or more sensors of varying types associated with the dental mannequin to sense the same or different conditions.

The frequency detected by the sensor of the device can be tracked and/or recorded, and feedback can be presented to a user. For example, the repositioning of a dental mannequin head during training procedures may be an inefficient manner of practicing dental procedures, as is the repositioning of the head during an actual dental procedure. Therefore, feedback to this extent can increase efficiency in the process. In one embodiment, the signal output device may be incorporated into the dental mannequin simulation device, or may be associated with the device. In a further embodiment, a processor is provided for processing information from the sensor regarding the condition of the dental mannequin.

Various sensors may implemented in the device to detect conditions as taught herein. The sensors utilized in the device may include, but are not limited to, a gyroscope, an accelerometer, an inclinometer, a contact sensor, a magnetometer, or some combination thereof. In an optional embodiment, the sensor is an inertial reference unit, which, as used herein, refers to a combination of two or more different sensors associated in or on a common housing.

In a certain embodiment, a sensor utilized includes various components to measure displacement and orientation in a two dimension (2D) or three-dimensional (3D) space.

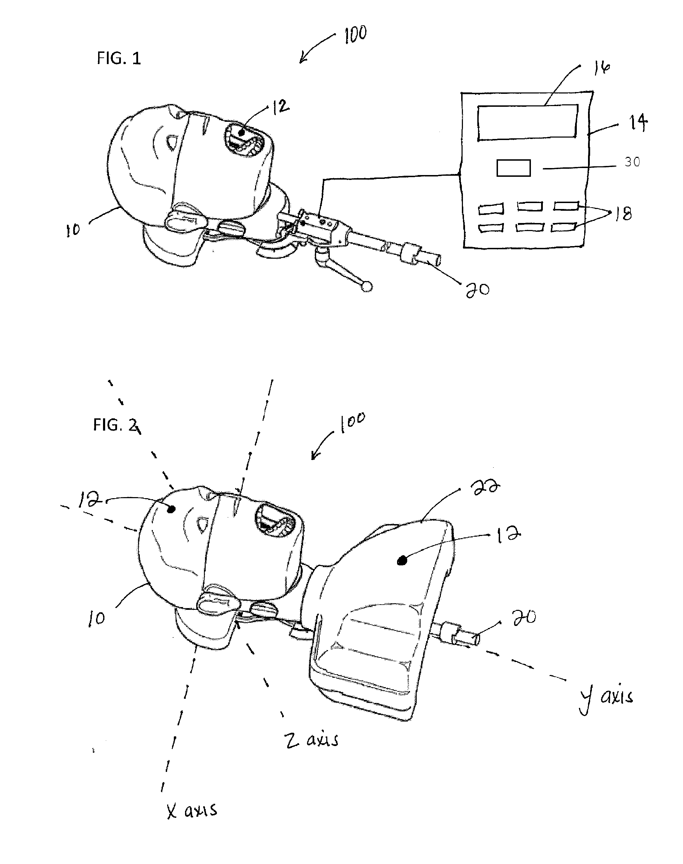

According to one embodiment, the condition being sensed is movement of the dental mannequin head along an x (head tilt) and y axis (head rotation) as shown in Figure 2. In a more specific, alternative embodiment, movement of the head along a z axis (see Figure 2) is sensed.

In addition to sensing movement, the device can sense orientation and/or positioning of the head either during or completion of movement. The sensing of movement, orientation and/or positioning can be achieved using one or more sensors. In a specific embodiment, movement and orientation of the dental mannequin head is achieved using a single sensor.

In a specific embodiment, the rotation and tilting of the dental mannequin head is achieved using a single sensor. Moreover, the rotation and tilt of the dental mannequin head may be recorded and stored. In a more specific embodiment, the sensor implemented to sense tilt and rotation, and optionally the extent of such movement, is one or two gyroscopes or accelerometers.

By embedding sensors directly on or within the dental mannequin (such as a gyroscope, accelerometer, and/or an inclinometer), the position and orientation of the device can be tracked. Feedback may be provided to the user in an automated manner to mitigate human error that arises from misalignment of the patient or of the dental instruments being used during the simulation. As an example, sensors can be used to detect misalignment or unnecessary movement and provide visual or auditory alerts to notify the user about the errors, and/or assist the user in correcting those errors.

Furthermore, the sensors provide real-time or just-in-time refresher training of dental skills in a simulated environment. These sensors along with the life-like dental mannequin recreate the experience of using a real device on an actual patient.

In one embodiment, the sensor implemented in the device comprises a gyroscope, typically affixed to or embedded in the dental mannequin head. Gyroscopes typically sense and/or measure motion or orientation based on the principles of angular momentum.

In another embodiment, the sensor comprises an accelerometer. According to another embodiment, the sensor comprises an inclinometer which measures angles of slope (or tilt), elevation or depression of an object with respect to gravity. An inclinometer can measure both inclines and declines.

In another embodiment, the sensor includes an inertial reference unit, wherein it uses two or more sensors, (e.g. accelerometers and/or gyroscopes) to determine a change in rotational attitude (angular orientation relative to a reference frame) and translational position over a period of time.

More than one sensor may be provided on the device or associated with the device to detect different conditions. It is noted that for many embodiments, the ability to sense conditions is achieved with the least number of sensors possible.

In an exemplary embodiment, the condition being sensed is tilting (pitch) and rotation (roll) of the dental mannequin head. In a specific embodiment, sensing the tilting and rotation of the head is achieved by a single sensor. In a more specific example, the sensor is a single gyroscope that detect roll and pitch of the dental mannequin head.

According to another specific alternative embodiment, the sensor is provided in an inertial reference unit that includes a combination of an accelerometer, gyroscope, and/or a magnetometer in a single package to measure inertial motion and relate the orientation of the device with respect to the gravity vector and the earth's magnetic field.

In another embodiment, the condition being sensed is a position of the device, which is sensed by one or more sensors. The position is based on the location of the device relative to a another location. In a specific embodiment, this condition may be sensed by the motion sensor. An output of the position, whether correct or incorrect may be provided to the user as feedback. This output may be audio or in the form of movement by the dental mannequin as discussed herein. The position of the device may be sensed, for example, when a student moves the device in a particular manner, whereby the device may provide guidance or feedback in the form of movement of the device or an output as would a living patient.

According to another embodiment, the sensor used is a gyroscope used to sense the movement and orientation of the mannequin. In specific embodiment, the sense is associated with a processor that interprets signals equipped with a storage device to record signals from the sensor. The processed and stored information can then be used to provide teaching feedback to the user.

Other types of sensors include contact sensors which sense a contact between an object and the device as well as proximity sensors which sense a proximity between an object and the device. These contact and proximity sensors can be used to provide feedback to a user of the device when the user is approaching (within a certain distance from) or has made contact with the dental mannequin simulation device. For example, if either of the contact or the proximity sensor were placed directly or indirectly on the dental mannequin simulation device, it could provide a teaching mechanism for a user to avoid contact with certain portions of the device. For example, the mannequin could provide an audible feedback such as a tone or a vocal statement or pain, annoyance, anger, offense, or another negative emotion in response to being touched, poked, or pressed in a manner or a location that would be uncomfortable, embarrassing, or inappropriate on a real person. For example, the mannequin could emit such an audible feedback if the user pressed too hard or touched a body part that would not be appropriate for a dentist to touch. In one particular example, an audio recording could be output to a user if an inappropriate contact is sensed by the contact sensor(s). In another particular example, a light or series of lights may signal an inappropriate contact so as to provide feedback to the user of the device. Any other type of feedback known in the art can be used to alert or to indicate to a user that the contact or near contact was appropriate or inappropriate. The sensor could be provided directly on the mannequin or on clothing that is associated with the mannequin to monitor the user's contact or proximity to the mannequin.

In another embodiment, based on the condition of the dental mannequin simulation device sensed, the device provides a feedback. The feedback may be provided as an output (audio, for example) or by movement of the device in response to a condition. This feedback may be provided, in one example when the condition meets a predetermined condition value or, alternatively, fails to meet a predetermined condition value. In another embodiment, the feedback may be provided via the signal output device. The signal output device is a device which can be external to the mannequin head, but which can be associated with the mannequin head via hardwire attachment, wireless attachment, or any other such type of association between two devices as known in the art. The association between the signal output device and the mannequin head provides for the transfer of data and/or information therebetween. The feedback provided by the dental mannequin head and/or the signal output device may be audio feedback, visual feedback, tactile or somatosensory feedback, olfactory feedback, or gustatory feedback, or any combination thereof. The feedback may be further provided in any manner known to one skilled in the art. In another embodiment the signal output device may include a user interface to allow input by a user. The user interface may further include one or more user input elements associated therewith. The user input elements may include buttons, switches, toggles, temperature sensitive selection elements, and any other user input elements known to those of skill in the art. In one embodiment, the user interface may include a graphical user interface (GUI) which allows a user to interact with the device by providing images to a user, for example.

Signal outputs are used herein by the device to communicate with and provide feedback to the user. In one embodiment, the signal output device generates a visual output including at least one light or screen display, or a combination thereof. The visual stimulation or feedback may include visual output such as an LED and/or an LCD display, for example. The display may provide information to the user about the training or simulation and about the device. It may also provide information about the user's condition or any other type of information useful for the user. Other types of visual feedback known the art are contemplated within the invention herein.

The signal output component of the device may generate an audio output, wherein the audio output may include a sound or a series of sounds. The audio output or feedback may include a beeping sound, an audible instruction or an audible message, musical feedback, or any other type of audio output as known to those of skill in the art. In one embodiment, the device is provided wherein a speaker is associated with the device for transmitting the audio output from the device. The speaker may be attached to the device, or the speaker may be wired or wirelessly connected to the device.

In another embodiment either olfactory (smellant) or gustatory (taste) feedback may be provided as a signal output from the device. The olfactory and gustatory feedback may be presented in combination with one another or may be in combination with any of the other signal outputs described herein to improve learning and training of the user of the device. Furthermore, in some embodiments, the olfactory and/or gustatory feedback may be used to simulate the olfactory and/or gustatory output received from a human or non-human dental patient.

Other types of output or feedback provided by the device may include tactile output or feedback such as temperature change or vibration of the device, for example. Examples of tactile output can be found in US Pat. No. 8,138,896, which is incorporated herein by reference. Many of the visual, auditory, and tactile outputs described herein are not necessarily only feedback to the user of the device, but can be prompts made by the device to a user to solicit user input or a user action, or to discourage user input or user action.

Any of the abovementioned outputs/feedback by the signal output component can be presented along with any of the other feedback of the device. For example, a visual and an audio feedback may occur at the same time or sequentially to enhance learning of the user of the device.

The one or more sensors of the device are associated with the device, and may be disposed on the device, integrated into the device, embedded in a portion of the device, directly or indirectly in contact with the device including a wireless and a hard-wired connection with the device.

The device may include cheeks, lips, and intra-oral anatomy, in some embodiments, to simulate those of a human or non-human animal anatomy. The typodonts provided in an embodiment may be interchangeable such that the device can be used for varying specialties. In one embodiment, a tongue provided within the oral cavity may be removable, and multiple size tongues can be removably affixed within the oral cavity. The tongue simulated a tongue of a human or non-human animal. The oral opening may be adjustable to provide a working area for varying sized users' hands. A nose is provided on the dental mannequin in some embodiments to provide a realistic training procedure. The dental mannequin head can vary in size, in one embodiment the dental mannequin head may simulate an adult human sized head, and in another embodiment the dental mannequin head may simulate a child sized head.

In a particular embodiment, a simulated training jaw feature of the dental mannequin head is provided. Training jaws of the dental simulator are supported to simulate the movement of the jaws in a skull about the occipito-atlantal joint. The jaw may be motorized such that the movement of the simulated jaw simulates that of a live dental patient jaw. This feature allows users of the device to familiarize themselves with the anatomical features of a live patient prior to working with a live patient. The simulated anatomical features of the dental mannequin device provide unparalleled training which benefits the trainee in dental practice.

In an embodiment, a processor is provided for processing information from the sensor regarding the condition of the dental mannequin. In a further embodiment, the processor is programmed to determine whether the condition meets a predetermined condition. A predetermined condition, for example, may include an optimal orientation or position of the dental mannequin head.

In a further embodiment, the processor is programmed to provide a feedback to the user in response to the condition. The feedback may include an audio output, visual output, gustatory output, olfactory output, or tactile output. Additionally, the feedback may include a movement of the dental mannequin simulation device. A movement, such as a vibration of the dental mannequin head or a movement of the upper and/or lower jaws of the dental mannequin head may be used to provide feedback to the user in some instances. In yet another embodiment, the movement may include a movement of an eye or an eyelid, a jaw or a nose of the dental mannequin simulation device.

In yet a further embodiment, a dental simulation system is provided. The system includes a dental workstation, and a dental mannequin simulation device for a dental training procedure. The dental mannequin simulation device includes a projection element configured to connect to the dental workstation, a dental mannequin head configured to simulate a head of a human or non-human animal, a sensor associated with the dental mannequin to sense a condition of the dental mannequin, and a signal output device to provide feedback to a user based in response to the condition, wherein the condition is motion, position, or orientation or frequency thereof. The output may be provided to the user by the dental workstation. The dental workstation may further include lighting to provide a simulated dental working environment, other dental instruments. A water or pressurized air connection may be included as part of the dental workstation to simulate a live non-training dental workstation.

The dental mannequin simulation device and/or system may contain software, firmware, a memory module such as a USB device which can be removable in one embodiment or it can be hard-wired or wirelessly connected to a computer, network, interface, one or more additional devices, which comprises program code information such as instructional script including instructions for use of the device. The information provided may also include a script which is provided as feedback when a condition occurs.

In another embodiment, the dental mannequin simulation device and/or system further includes a microprocessor. The circuitry of the device may include at least in part: the microprocessor; one or more signal output components for initiating and controlling the audio, visual, tactile, somatosensory, olfactory, and/or gustatory feedbacks described above; one or more signal input components for receiving signals from the sensors described above, and other electronic components. The components may be operatively coupled by electrical conductors, however, in other embodiments the components may be operatively coupled without being physically connected. For example, in some embodiments, at least a portion of the components included in an electronic circuit system can be inductively coupled. In other embodiments, at least a portion of the components included in an electronic circuit system can be evanescently coupled.

The circuitry of the device may include a flexible printed circuit board to electronically couple with the components contained therein. The circuitry may be disposed in any suitable manner relative to the housing of the device, or may be associated with the housing of the device. In some embodiments, for example, the circuitry can be integrated with device. The circuitry can be contained within the housing of the device, and/or it may be partially or fully assembled concurrently with and/or with the same processes of the device, the circuitry may alternatively or in addition be provided on the outer portion of the device.

In yet another embodiment, a non-transitory computer-readable medium can be embedded in the device. The non-transitory computer readable medium stores instructions executable by the microprocessor or another processing device to cause the processing device to output audio, in one example, via the signal output component of the device in response to an activation of a user input element on a control interface of the device to provide feedback to a user in response to the user input in an embodiment, in other embodiments this process occurs without user input.

Some embodiments of the invention relate to a computer storage product with a computer-readable medium having instructions or computer code thereon for performing various computer-implemented operations. The media and computer code may be those specially designed and constructed for the purposes of the invention, or they may be of the kind well known and available to those having skill in the computer software arts. Examples of computer-readable media include, but are not limited to: magnetic storage media such as hard disks, floppy disks, and magnetic tape; optical storage media such as Compact Disc/Digital Video Discs ("CD/DVDs"), Compact Disc-Read Only Memories ("CD-ROMs"), and holographic devices; magneto-optical storage media such as floptical disks; carrier wave signals; and hardware devices that are specially configured to store and execute program code, such as Application-Specific Integrated Circuits ("ASICs"), Programmable Logic Devices ("PLDs"), and ROM and RAM devices. Examples of computer code include, but are not limited to, micro-code or micro-instructions, machine instructions, such as produced by a compiler, and files containing higher-level instructions that are executed by a computer using an interpreter. For example, an embodiment of the invention may be implemented using Java, C++, or other object-oriented programming language and development tools. Additional examples of computer code include, but are not limited to, control signals, encrypted code, and compressed code.

The data storage modules or memory modules may include a storage medium component(s) such as, but not limited to, an electronic, magnetic, optical, electromagnetic, infrared, or semiconductor system, apparatus, device, or propagation medium. More specific examples (a non-exhaustive list) of the computer-readable medium would include the following: a portable computer diskette, a random access memory (RAM), a read-only memory (ROM), an erasable programmable read-only memory (EPROM or Flash memory), an optical fiber, a portable compact disc read-only memory (CD-ROM), a DVD (digital video disk), or other electronic storage medium.

Computer program code modules for carrying out operations of certain embodiments of the present invention may be written in an object oriented, procedural, and/or interpreted programming language including, but not limited to, Java, Smalltalk, Perl, Python, Ruby, Lisp, PHP, "C", FORTRAN, Assembly, or C++. The program code modules may execute entirely on the device, partly on the device, as a stand-alone software package, partly on the device and partly on a remote computer or device or entirely on the remote computer or device. In the latter scenario, the remote computer or device may be connected to the user's device through a local area network (LAN) or a wide area network (WAN), or the connection may be made to an external computer (for example, through the Internet using an Internet Service Provider).

Turning to the Figures, FIG. 1 provides a perspective view of an embodiment of the dental mannequin simulation device 100. The embodiment of FIG. 1 includes a dental mannequin head 10, a sensor 12 associated with the head, and a signal output device 14 attached to the device 100. The signal output device includes a user interface 16 and multiple user input elements 18. A projection element 20 is provided in FIG. 1. The projection element may be used to attach the device 100 to a dental work station or other device. A processor 30 is shown in FIG. 1 as integrated into the user interface 16. The processor is provided to process information from the sensor(s) of the device regarding conditions of the dental mannequin simulation device 100. The processor 30 need not necessarily be integrated into the user interface 16, but can be a separate feature of the dental mannequin simulation device 100 which is interconnected or associated with the device 100 via a hard wire, wireless or other connection known in the art.

FIG. 2 provides a perspective view of an embodiment of the dental mannequin simulation device 100 wherein a dental mannequin head 10 is provided and a torso region 22 is attached to the device 100. The torso region 22 is shown as a portion of an upper torso but may also include a more complete torso. A sensor 12 is provided on the dental mannequin head 10 and the torso region 22. The x, y, and z axes are also identified in FIG. 2.

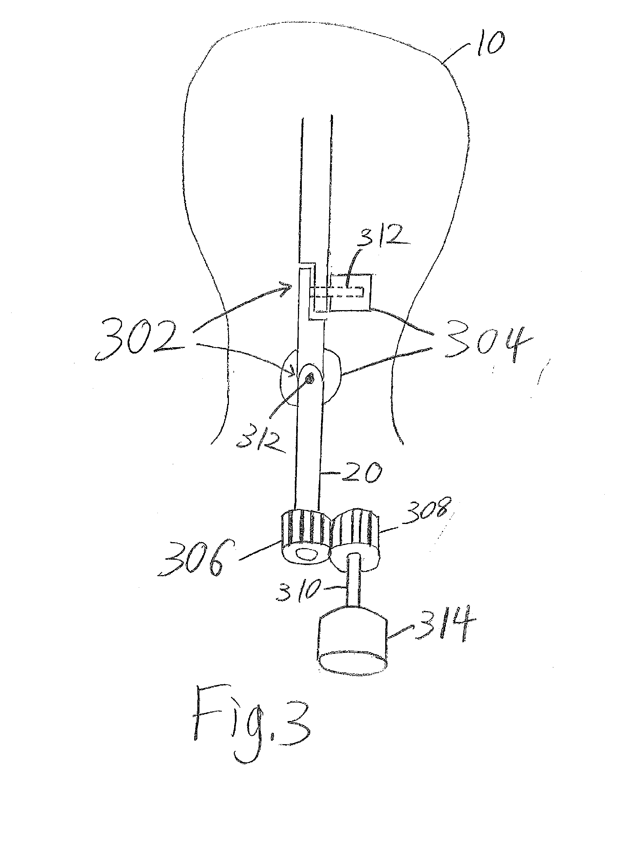

As illustrated in FIG. 3, the mannequin can be provided with rotatable joints 302 in the neck region to allow movement of the head 10 in one or more dimensions - e.g., forward/backward and/or side-to-side. In addition, head support shaft 20 can rotate to allow rotation of the head 10. Each of the illustrated joints 302 includes a protruding shaft 312 that engages with a rotation sensor 304 that detects bending of the joint 302. In the illustrated example, rotation of the head 10 is detected by a rotation sensor 314 that is engaged to the support shaft/proj ection element 20 through one or more gears 306 and 308 and a rotating sensor shaft. However, other methods for engaging a rotation sensor with a joint or a rotating shaft will be well understood by those skilled in the art.

In the exemplary embodiment illustrated in FIG. 3, rotation sensors 304 and 314 can be, for example: encoders such as the Series EC23 Miniature Encoders sold by Dynapar; potentiometer-based, rotary position sensors; or any other kind of sensor for detecting rotary motion or position. Numerous types of rotation sensors are well known by those skilled in the art.

Typical engineering materials, including many metals, ceramics, and plastics commonly employed in industry may be used in creating the model depending on the required analog properties.

It is important to an understanding of the present invention to note that all technical and scientific terms used herein, unless defined herein, are intended to have the same meaning as commonly understood by one of ordinary skill in the art. The techniques employed herein are also those that are known to one of ordinary skill in the art, unless stated otherwise. For purposes of more clearly facilitating an understanding the invention as disclosed and claimed herein, the following definitions are provided.

While a number of embodiments of the present invention have been shown and described herein in the present context, such embodiments are provided by way of example only, and not of limitation. Numerous variations, changes and substitutions will occur to those of skill in the art without materially departing from the invention herein. For example, the present invention need not be limited to best mode disclosed herein, since other applications can equally benefit from the teachings of the present invention. Also, in the claims, means-plus-function and step-plus-function clauses are intended to cover the structures and acts, respectively, described herein as performing the recited function and not only structural equivalents or act equivalents, but also equivalent structures or equivalent acts, respectively. Accordingly, all such modifications are intended to be included within the scope of this invention as defined in the following claims, in accordance with relevant law as to their interpretation.

## Claims

1. A dental mannequin simulation device for a dental training procedure, comprising:
a dental mannequin head configured to simulate a head of a human or non-human animal;
a sensor associated with the dental mannequin, the sensor configured to sense first and second conditions of the dental mannequin, the first condition comprising a change in tilt of the dental mannequin head, and the second condition comprising a change in rotation of the dental mannequin head; and
a signal output device configured to provide feedback to a user in response to at least one of the first and second conditions.

2. The dental mannequin simulation device of claim 1, wherein the sensor is further configured to sense a change in position of the dental mannequin head.

3. The dental mannequin simulation device of claim 1 or 2, wherein the sensor is further configured to sense a frequency of at least one of the first and second conditions.

4. The dental mannequin simulation device of any of the previous claims, wherein the sensor is further configured to sense a physical contact that, if it were made to a real person, would be at least one of uncomfortable, embarrassing, and inappropriate.

5. The dental mannequin simulation device of any of the previous claims, wherein the sensor is an inclinometer.

6. The dental mannequin simulation device of any of the previous claims, wherein the sensor is an accelerometer.

7. The dental mannequin simulation device of any of the previous claims, wherein the sensor is an inertial reference unit.

8. The dental mannequin simulation device of any of the previous claims, wherein the sensor is a gyroscope.

9. The dental mannequin simulation device of any of the previous claims, wherein the sensor is a motion sensing device.

10. The dental mannequin simulation device of any of the previous claims, wherein the signal output device is further configured to provide a feedback to a user when the condition of the dental mannequin meets a predetermined condition value.

11. The dental mannequin simulation device of claim 10, wherein the feedback comprises a simulated vocal statement.

12. The dental mannequin simulation device of any of the previous claims, wherein the signal output device comprises a user interface.

13. The dental mannequin simulation device of claim 12, wherein the user interface is a graphical user interface (GUI).

14. The dental mannequin simulation device of claim 13, wherein the user interface includes at least one user input element.

15. The dental mannequin simulation device of any of the previous claims, wherein the sensor is embedded in the dental mannequin head.

16. The dental mannequin simulation device of any of the previous claims comprises a projection element configured for connection to a dental workstation.

17. The dental mannequin simulation device of any of the previous claims, further comprising a torso region.

18. The dental mannequin simulation device of claim 17, wherein the torso region comprises at least one sensor.

19. A dental mannequin simulation device for a dental training procedure, comprising:
a dental mannequin head configured to simulate a head of a human or non-human animal;
a sensor associated with the dental mannequin and configured to sense a plurality of movements of the dental mannequin head, and
a processor associated with the sensor, said processor comprising circuitry and programming configured to store the plurality of movement sensed by the sensor.

20. A dental mannequin simulation device for a dental training procedure, comprising:
a dental mannequin head configured to simulate a head of a human or non-human animal; and
a sensor associated with the dental mannequin and configured to sense a condition of the dental mannequin head, wherein said sensor comprises a gyroscope, accelerometer or inclinometer.
